# EUROPEAN PATENT SPECIFICATION

(11) **EP 1 395 768 B1**
(45) Date of publication and mention of the grant of the patent: **15.11.2006**
(21) Application number: 02727752.4
(22) Date of filing: 23.05.2002
(51) Int. Cl.: F16L 5/10

(54) **CONSTRUCTION FOR ROUTING A CONDUIT OR THE LIKE THROUGH A STRUCTURAL MEMBER**
VORRICHTUNG ZUM DURCHFÜHREN EINER LEITUNG ODER DERGLEICHEN DURCH EIN BAUELEMENT
CONSTRUCTION PERMETTANT L'ACHEMINEMENT D'UN CONDUIT OU ANALOGUE A TRAVERS UN ORGANE STRUCTUREL

(30) Priority: 14.06.2001 GB 0114442
(43) Date of publication of application: 10.03.2004
(73) Proprietor: Airbus UK Limited, Bristol, BS99 7AR (GB)
(72) Inventor: TUDGAY, Martin, Airbus UK Ltd., Bristol BS11 9GN (GB); BURGUETE, Richard, Airbus UK Ltd., Filton, Bristol, BS99 7AR (GB); NIXON, Andrew, Airbus UK Ltd., Avonmouth, Bristol BS11 9GN (GB); BENNETT, David Roy, Airbus UK Ltd., Filton, Bristol, BS99 7AR (GB); GRIFFIN, Jonathan, Airbus UK Ltd., Avonmouth, Bristol BS11 9GN (GB); BROWN, Philip Andrew, Airbus UK Ltd., Filton, Bristol, BS99 7AR (GB)
(74) Representative: Edis, Ronald Malcolm
(86) International application number: PCT/GB2002/002421
(87) International publication number: WO 2002/103235

(56) References cited:
- EP-A- 0 468 563
- DE-A- 10 003 363
- US-A- 4 282 627

## Description

This invention relates to a construction for fitting to a structural member. In particular, this invention relates to a construction for routing a conduit or the like through a structural member where the integrity of the seal made by the structural member must be maintained. An example of such a construction is shown in document DE 100 03 363 A. A currently preferred application of the invention is for passing a fuel quantity indicator (FQI) cable out of the fuel tank in an aircraft wing through a wing spar, although it will be evident that many other applications exist including routing pipes and hoses.

Generally, the front and rear wing spars of a commercial aeroplane wing form part of the enclosing walls of the fuel tank. Each tank will have at least one FQI measuring device which must be connected to the FQI display in the cockpit. This connection is usually made using electrical wires, although fibre optics could be used; the present invention being equally applicable for use with either electrical wires or fibre optics.

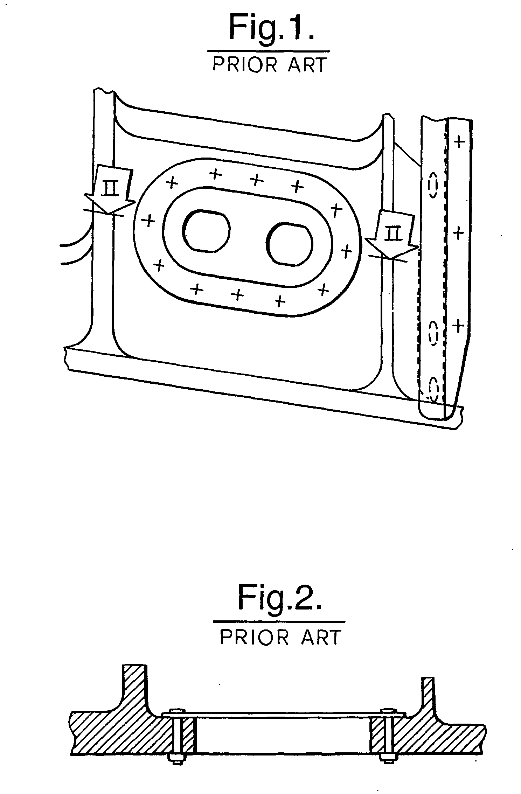

Hence, a cable comprising a bundle of electrical wires or a bundle of fibre optics must be taken out of the fuel tank and this cable is usually routed through a wing spar. This is done by drilling two holes through the wing spar with subsequent milling to form an elongate slot, followed by bolting a plate with two apertures over the holes, as shown in Figures 1 and 2. A sealant is used to make a leak-free seal between the plate and wing spar. Of course, it is vitally important that no fuel or fuel vapour escapes from the fuel tank because of the risk of explosion or fire. A seal between the cable and the plate is made by clamping male and female halves of an electrical connector together against opposite sides of the plate, thereby providing the electrical or optical connection that maintains the continuity of the cable between the FQl device and display.

However, open apertures in a wing spar inevitably weakens it as the regions of the wing spar around the apertures are particularly susceptible to crack formation and propagation when placed under stress. Cracks in the wing spar may lead to fuel leaking from the fuel tank or to structural failure of the wing spar. In order to meet strength requirements, the thickness of the wing spar must be increased locally to compensate for the weakening caused by the holes. This increase in weight far outstrips any saving made by removing material when forming the holes, which is highly undesirable as the overall weight of a commercial aeroplane is crucial to its economic viability.

From a first aspect, the invention resides in an annular bush for fitting tightly in an aperture defined in a structural member, the annular bush being expandable radially when located in the aperture by the action of a mandrel being passed through a longitudinal passageway defined by the bush whereby to exert a compressive force upon the region of the structural member surrounding the bush, wherein the bush has a coupling for sealable attachment of a conduit to the bush.

Expanding the bush radially to compress material around the hole is generally referred to as 'cold working'. The compressed material of the wing spar has much improved resistance to crack formation and propagation, thereby compensating for the weakening caused by drilling the hole. Most importantly, the increased strength that cold-working produces obviates the need to increase the thickness of the wing spar to compensate for a weakened hole section. Therefore, the severe penalty of an increase in weight is avoided by the invention.

The passageway through the bush is used for passing a conduit therethrough. It should be noted that the term 'conduit' is used in its broadest sense to include pipes, hoses, cables or any other similar means for communicating one side of the structural member with the other. It will be appreciated that a cable may contain electrical wires or fibre optics as noted before, or a single wire or fibre. Moreover, 'conduit' is intended to include both a continuous conduit and also a conduit formed by two or more parts joined by a connector. In the latter case, the bore of the passageway is sized to accommodate the connectors which are frequently of a greater size than the conduits they connect.

It will be apparent to the person skilled in the art that many types of couplings and methods of coupling may be employed. These include both permanent methods of coupling (e.g. welding) and releasable couplings (e.g. clamps) so that the conduit can be removed from the bush at a later time.

Optionally, the coupling may be located so that a mandrel can be passed through the bush without fouling the coupling. Clearly, if the coupling interferes with the mandrel's passage through the bush, it will be only the coupling that is expanded. Conveniently, this may be achieved by providing the bush with a body for positioning within the aperture of the structural member, the body defining the minimum bore of the passageway and the coupling being in the form of an annular head of increased bore relative to the body. In this way, it will be the body of the bush that is expanded radially when a tapered mandrel is passed through the bush, with the mandrel not acting directly on the coupling.

The coupling may join the body of the bush at a stepped shoulder, so that the coupling extends axially from the shoulder. When the bush is fitted to a wing spar, the shoulder may be used to provide a stop for seating the bush member in the desired axial position so that its other end terminates flush with an opposite face of the wing spar. It will be appreciated that the extent of the overlap between the shoulder of the bush and an adjacent surface of the wing spar affects the ease of forming a leak-free seal therebetween.

In a currently preferred embodiment, a thread is located on an internal wall of the coupling.

A second aspect of the invention resides in a bush and secondary coupling combination, comprising the bush according to the first aspect of the invention and a secondary coupling provided with an aperture, the secondary coupling being adapted for coupling with the coupling of the bush thereby to reduce the minimum bore of the passageway and to provide a stop within the passageway. When in use, the aperture of the secondary coupling may be penetrated by a part of a conduit and, optionally, a flange of the part may abut against the stop provided in the passageway. This allows, for example, one half of a connector of the conduit to project through the secondary coupling to connect with the other half of the connector.

In a preferred embodiment, the aperture of the secondary coupling is shaped for locating a part of a conduit received therein in a preferred orientation. Conveniently, the aperture may be substantially D-shaped. In addition to locating the conduit, a D-shaped aperture also stops any unwanted rotation of the conduit.

Optionally, the secondary coupling is adapted for receiving two parts of the conduit clamped thereabout. For example, this may be by providing the secondary coupling with mating surfaces that the parts of the conduit mate against. Advantageously, an O-ring may form a seal between the conduit and secondary coupling member.

Conveniently, the currently preferred stepped bush comprising body and coupling may be used with a disk-like secondary coupling that is provided with a thread around its periphery. This thread is co-operable with the thread of the coupling of the bush described hereinabove. This allows the parts of the conduit to clamp against opposed sides of the disk-like secondary coupling.

The secondary coupling may be locked to the bush to prevent the secondary coupling unscrewing and becoming free of the bush. A wire locking arrangement may conveniently be used. Conveniently, a hole may be provided in the outer edge of the enlarged portion of the bush to receive the wire.

The invention also resides in a wing spar including a bush and secondary coupling combination according to the second aspect of the invention and in a wing and aeroplane including such a wing spar.

In order that the invention can be more readily understood, reference will now be made, by way of example only, to the accompany drawings in which:
Figure 1 is a plan view of a known fitting for routing cables through a wing spar;
Figure 2 is a section along line II-II of Figure 1;
Figure 3 is an exploded view of an assembly for connecting an FQI measuring device in a fuel tank to an FQI display in a cockpit according to the present invention;
Figure 4 is an assembled view of the assembly of Figure 3;
Figure 5 is a plan view of a secondary coupling in the form of a cable support according to the present invention;
Figure 6 is a section along line VI-VI of Figure 5;
Figure 7 is a section through a bush according to a first embodiment of the present invention;
Figure 8 is an enlarged detail of the part of the bush circled in Figure 7;
Figure 9 is a section through a bush according to a second embodiment of the present invention; and
Figure 10 is an enlarged detail of the part of the bush circled in Figure 9.

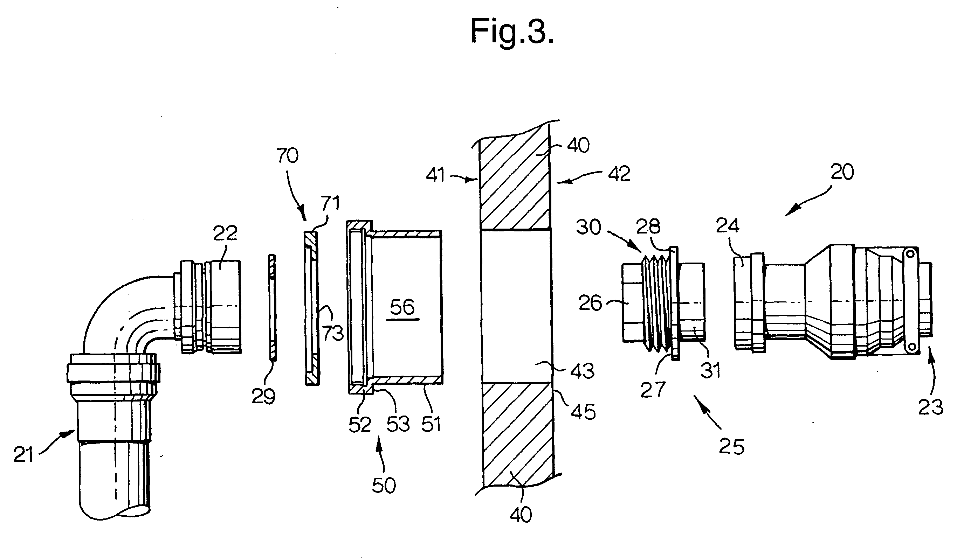

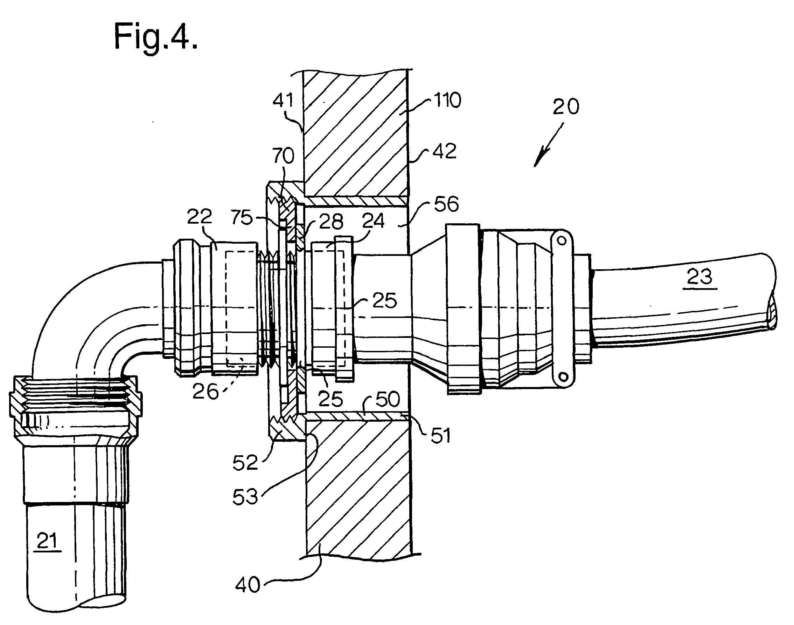

Figures 3 and 4 show three components 21, 23, 25 of a conduit in the form of an electrical cable 20 connected through a top-hat-shaped bush 50 fitted in a wing spar 40. An elbowed portion 21 of the cable 20 extends to the air-side 41 of the wing spar 40 and terminates at a female connector 22. The female connector 22 connects to a central female-to-female connector 25 which, in turn, connects to a further female connector 24 on the fuel-side 42 of the wing spar 40. The female connector 24 communicates with the FQI measuring device (not shown) through a fuel-side portion 23 of the cable 20.

As can best be seen by comparing Figures 3 and 4, the bush 50 is fitted in the wing spar 40 so that a body 51 of the bush 50 resides within an aperture 43 in the wing spar 40. When fitted thus, an enlarged head 52 of the bush 50 protrudes from the aperture 43 on the air side 41 of the wing spar 40. The body 51 of the bush 50 meets the head 52 at a stepped shoulder 53, this shoulder 53 abutting an airside surface 44 of the wing spar 40 when fitted. The body 51 is sized to fit snugly within the aperture 43 and has a depth such that it terminates flush with a fuel-side surface 45 of the wing spar 40.

A disk-like secondary coupling in the form of a cable support 70 is screwed into the head 52 of the bush 50, a peripheral surface 71 of the cable support 70 and an internal wall 54 of the head 52 having corresponding threads 74 and 55 respectively.

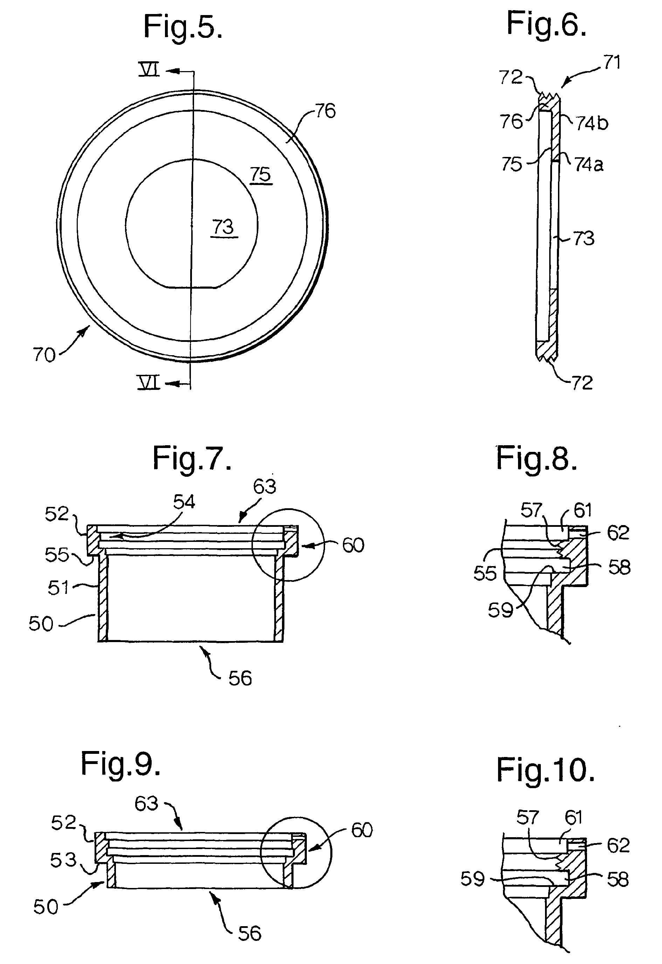

The cable 20 is connected through the bush 50 and the cable support 70 via a large internal bore 56 of the annular bush 50 and a D-shaped aperture 73, see Figure 5, provided centrally in the cable support 70. An internal bore 63 of the head 52 of the bush 50 is larger than in the bore 56 of the body 51, the cable support 70 having a greater diameter than the bore 56. The size of the cable support's aperture 73 is less than the bore 56. A D-shaped end 26 of the female-to-female connector 25 is sized just to pass through the D-shaped aperture 73 and is shaped only to pass therethrough in a set orientation.

The female-to-female connector 25 has a flange 27 with an integral O-ring 28 which abuts an inner portion 74a of a mating surface 74 of the cable support 70, see Figure 6, to form a seal. This seal is formed by screwing a threaded nut 29 on a thread 30 provided on the end 26 of the female-to-female connector 25 that protrudes through the aperture 73 of the cable support 70. Hence, when screwed into place, the nut 29 bears against an inset surface 75 of the cable support 70, see Figure 6, thereby clamping the O-ring 28 of the female-to-female connector 25 against the opposed mating surface 74a of the cable support 70.

Therefore, when assembled as described above, the D-shaped end 26 of the female-to-female connector 25 extends through the aperture 73 of the cable support 70 on the air-side 41 of the wing spar 40 and the other end 31 sits within the bore 56 defined by the body 51 of the bush 50. The female connector 22 of the elbowed portion 21 of the cable 20 connects with the air-side end 73 of the female-to-female connector 70 and the female connector 24 of the fuel-side portion 23 of the cable 20 connects with the fuel side 31 of the female-to-female connector 25. Both connections are made with a push-fit. Electrical connections are made using a conventional pin and socket arrangement.

A first embodiment of a bush 50 is shown in Figures 7 and 8, and a second embodiment is shown in Figures 9 and 10. The two embodiments differ only in the depth of their bodies 51. This difference in depth arises because the first embodiment is used on relatively thick inner rear wing spars and the second embodiment is used in relatively thin inner front wing spars. As noted above, the depth of the bodies 51 is such that they terminate flush with the fuel side surface 45 of the wing spar 40 when their shoulder 53 abuts against the airside surface 44 of the wing spar 40.

Figures 8 and 10 show enlarged details of the sides of the head 52 of both embodiments of the bush 50: it will be noted that they correspond, and so will be described together.

The thread 55 of the bush 50 sits on a relatively narrow waist 57 of the head 52, this waist 57 being both undercut and overcut. The undercut portion 58 meets the narrower body 51 at a shoulder 59 which provides a seat against which the outer portion 74b of the mating surface 74 of the cable support 70 is seated when the cable support 70 is screwed fully into the bush 50. A sealant is used to form a leak-free seal between the shoulder 59 and the cable support 70. Hence, the mating surface 74 of the cable support 70 is used to form the seal both between the cable support 70 and the O-ring 28 of the female-to female connector 25 at 74a and between the cable support 70 and the shoulder 59 of the bush 50 at 74b. The final seal that is required to form a leak free barrier between the air-side 41 and fuel-side 42 of the wing spar 40 is formed by cold working the bush 50 in the hole, thereby sealing the bush 50 within the hole, as will be described later.

As can best be seen from Figures 8 and 10, the side wall 60 of the bush 50 that defines the overcut portion 61 of the head 52 has a small aperture 62, formed to break through from one side to the other side of the wall 60. When assembled, a wire (not shown) is passed through this aperture 62 and a co-operating aperture in the nut 29 (not shown), and the ends of the wire are twisted together ensuring the wire is taut. This prevents the cable support 70 from unscrewing which may break its seal with the bush 50.

Before the various parts 20, 25, 50, 70 of the assembly can be put together, the bush 50 must be fitted to the wing-spar 40 and cold-worked. The aperture 43 in the wing spar 40 is formed to be of a comparable size to the body 51 of the bush 50, so that the body 51 of the bush 50 is a tight fit within the aperture 43. Installation of the bush 50 may, optionally, be assisted by first applying a sealant to the outer sides of the bush 50, which acts initially as a lubricant.

The bush 50 and wing spar 40 are then cold-worked by pulling a frusto-conical mandrel through the bush 50. The taper of the mandrel is such that its minimum diameter is less than that of the bore 56 of the body 51 of the bush 50, but its maximum diameter is larger. However, its maximum diameter is less than that of the thread 55 on the internal wall 54 of the head 52 of the bush 50, so that the thread 55 is not damaged when the mandrel is pulled through.

Therefore, the body 51 of the bush 50 is expanded evenly around its circumference as the mandrel is pulled through. In turn, this expansion of the bush 50 compresses the wing spar 40 around the bush 50. Hence, the bush 50 is left secured to the wing spar 40 - a great pull-out force is required to remove the bush 50. Furthermore, cold-working forms a seal between the bush 50 and the wing spar 40. For additional safety, use of the optional sealant described above may reinforce this seal.

As noted above, where the sealant is used it initially acts as a lubricant and significantly lowers the pull-out force required to remove the bush 50. However, it has been found that upon curing, the required pull-out force is greater than if no sealant had been used. Whilst the curing time can be quite lengthy, this is not a problem as it is usually far less that the typical period of several months for the wing spar 40 to be built into an operational aeroplane.

The thread 55 is initially formed in a slightly frusto-conical form. Then when the bore 56 is expanded by cold working the thread becomes parallel sided.

## Claims

1. An annular bush (50) for fitting tightly in an aperture (43) defined in a structural member, wherein the bush (50) has a coupling (52) for sealable attachment of a conduit (20) to the bush (50), **characterised in that** the annular bush is expandable radially when located in the aperture (43) by the action of a mandrel being passed through a longitudinal passageway defined by the bush (50) whereby to exert a compressive force upon the region of the structural member (40) surrounding the bush (50).

2. A bush according to claim 1, wherein the coupling (52) is located so that a mandrel can be passed through the bush (50) without fouling the coupling (52).

3. A bush (50) according to claim 2 comprising a body (51) for positioning within the aperture (43) of the structural member (40) the body (51) defining the minimum bore of the passageway and the coupling (52) being in the form of an annular head of increased bore relative to the body (51).

4. A bush (50) according to claim 3, wherein a thread is located on an internal wall of the coupling.

5. A bush (50) and secondary coupling combination comprising the bush of any preceding claim and a secondary coupling (70) provided with an aperture, the secondary coupling (70) being adapted for coupling with the coupling of the bush thereby to reduce the minimum bore of the passageway and to provide a stop within the passageway.

6. The combination of claim 5, wherein the secondary coupling (70) is adapted for receiving two parts of a conduit clamped thereabout.

7. The combination of claim 6, wherein an O-ring (28) forms a seal between the conduit and secondary coupling member.

8. The combination of claim 6 or claim 7 comprising the bush of claim 4, wherein the secondary coupling (70) is disk-like with a thread provided around its periphery for co-operating with the thread of the coupling of the bush (50), the parts of the conduit clamping around its opposed sides.

9. A wing spar including the bush (50) and secondary coupling (70) combination of any of claims 5 to 8.

10. An aeroplane wing including a wing spar according to claim 9.

11. An aeroplane including a wing according to claim 10.

## Patentansprüche

1. Ringbuchse (50) für einen festen Sitz in einer Öffnung (43), die in einem Bauelement definiert ist, wobei die Buchse (50) eine Kupplung (52) zur abdichtbaren Befestigung einer Leitung (20) an der Buchse (50) aufweist, **dadurch gekennzeichnet, dass** die Ringbuchse bei Anordnung in der Öffnung (43) durch die Wirkung eines Dorns, der durch einen durch die Buchse (50) definierten Längsdurchgang geführt wird, radial ausdehnbar ist, wodurch eine Druckkraft auf den Bereich des Bauelements (40), der die Buchse (50) umgibt, ausgeübt wird.

2. Buchse nach Anspruch 1, wobei die Kupplung (52) so angeordnet ist, dass ein Dorn durch die Buchse (50) geführt werden kann, ohne mit der Kupplung (52) zusammenzustoßen.

3. Buchse (50) nach Anspruch 2, mit einem Körper (51) zur Positionierung in der Öffnung (43) des Bauelements (40), wobei der Körper (51) den minimalen Innendurchmesser des Durchgangs definiert und die Kupplung (52) in der Form eines ringförmigen Kopfes mit relativ zu dem Körper (51) vergrößertem Innendurchmesser vorliegt.

4. Buchse (50) nach Anspruch 3, wobei an einer Innenwand der Kupplung ein Gewinde angeordnet ist.

5. Kombination aus Buchse (50) und Sekundärkupplung, umfassend die Buchse nach einem der vorhergehenden Ansprüche und eine Sekundärkupplung (70), die mit einer Öffnung versehen ist, wobei die Sekundärkupplung (70) zum Kuppeln mit der Kupplung der Buchse ausgebildet ist, um **dadurch** den minimalen Innendurchmesser des Durchgangs zu reduzieren und einen Anschlag in dem Durchgang zu schaffen.

6. Kombination nach Anspruch 5, wobei die Sekundärkupplung (70) zur Aufnahme von zwei Teilen einer Leitung ausgebildet ist, die daran geklemmt sind.

7. Kombination nach Anspruch 6, wobei ein O-Ring (28) eine Dichtung zwischen der Leitung und dem Sekundärkupplungselement bildet.

8. Kombination nach Anspruch 6 oder 7, umfassend die Buchse nach Anspruch 4, wobei die Sekundärkupplung (70) scheibenartig mit einem um ihren Umfang vorgesehenen Gewinde ausgebildet ist, um mit dem Gewinde der Kupplung der Buchse (50) zusammenzuwirken, wobei die Teile der Leitung um ihre gegenüberliegenden Seiten geklemmt sind.

9. Tragflächenholm mit der Kombination aus Buchse (50) und Sekundärkupplung (70) nach einem der Ansprüche 5 bis 8.

10. Flugzeugflügel mit einem Tragflächenholm nach Anspruch 9.

11. Flugzeug mit einem Flügel nach Anspruch 10.

## Revendications

1. Une douille annulaire (50) destinée à s'emboîter de façon serrée dans une ouverture (43) définie dans un élément structural où la douille (50) a un couplage (52) destiné à la fixation scellable d'un conduit (20) à la douille (50), **caractérisée en ce que** la douille annulaire peut être élargie radialement lorsqu'elle est située dans l'ouverture (43) grâce à l'action d'un mandrin amené à traverser un passage longitudinal défini par la douille (50) pour exercer de ce fait une force de compression sur la région de l'élément structural (40) qui entoure la douille (50).

2. Une douille selon la revendication 1, dans laquelle le couplage (52) est situé de sorte qu'un mandrin puisse passer au travers de la douille (50) sans interférer avec le couplage (52).

3. Une douille (50) selon la revendication 2 comportant un corps (51) destiné à être positionné au sein de l'ouverture (43) de l'élément structural (40), le corps (51) définissant l'alésage minimum du passage et le couplage (52) étant sous la forme d'une tête annulaire ayant un alésage accru par rapport au corps (51).

4. Une douille (50) selon la revendication 3, dans laquelle un filetage est situé sur une paroi interne du couplage.

5. Une combinaison douille (50) et couplage secondaire, comportant la douille de n'importe quelle revendication précédente et un couplage secondaire (70) muni d'une ouverture, le couplage secondaire (70) étant adapté pour être couplé au couplage de la douille pour réduire de ce fait l'alésage minimum du passage et pour fournir une butée au sein du passage.

6. La combinaison de la revendication 5, dans laquelle le couplage secondaire (70) est adapté pour recevoir deux parties d'un conduit serrées autour de celui-ci.

7. La combinaison de la revendication 6, dans laquelle un joint torique (28) forme un scellement entre le conduit et l'élément de couplage secondaire.

8. La combinaison de la revendication 6 ou de la revendication 7 comportant la douille de la revendication 4, dans laquelle le couplage secondaire (70) est semblable à un disque, un filetage étant prévu autour de sa périphérie pour coopérer avec le filetage du couplage de la douille (50), les parties du conduit étant serrées autour de ses côtés opposés.

9. Un longeron d'aile comprenant la combinaison douille (50) et couplage secondaire (70) de n'importe lesquelles des revendications 5 à 8.

10. Une aile d'aéronef comprenant un longeron d'aile selon la revendication 9.

11. Un aéronef comprenant une aile selon la revendication 10.
